# EUROPEAN PATENT SPECIFICATION

(11) **EP 0 926 399 B1**
(45) Date of publication and mention of the grant of the patent: **20.02.2002**
(21) Application number: 98203489.4
(22) Date of filing: 16.10.1998
(51) Int. Cl.: F16H 57/02, B60K 17/04

(54) **Adaptable transmission housing for motor vehicle with one or more driving wheels**
Veränderbares Gehäuse für Getriebe eines Fahrzeuges mit einem oder mehreren Rädern
Carter de transmission adaptable pour véhicules ayant une ou plusieurs roues motrices

(30) Priority: 17.12.1997 IT MI972791
(43) Date of publication of application: 30.06.1999
(73) Proprietor: PIAGGIO & C. S.p.A., 56025 Pontedera (Pisa) (IT)
(72) Inventor: Ierace, Armando, 56038 Ponsacco (Pisa) (IT)
(74) Representative: De Gregori, Antonella

(56) References cited:
- DE-A- 3 015 029
- US-A- 3 246 538
- US-A- 4 441 378
- US-A- 4 856 367

## Description

The present invention refers to a variable compact structure in a motor vehicle drive transmission with one or more driving wheels.

It is well known that in motor vehicles with one or more driving wheels, in particular in the motor vehicle provided with a gear wheels or mechanical gears driving system, there is a need to realise a structure suitable to support both the driving shaft or axis, the so called "motor" shaft, and the shaft or the axis wherein the driving wheel or wheels are located, usually in the rear position.

Such a transmission, in these motor vehicle, implies a certain overall dimensions and, as a consequence, a suitable support structure has to be realised.

Further, it has to be considered that the transmission can change according to the motor vehicle type to be obtained. In particular, it is possible that, with the same general manufacturing characteristics, it is desirable to realise a motor vehicle which has a different distance between the driving axis and the wheel or wheels axis, for specific needs.

In fact, usually, in specific cases the drive transmission is realised by means of a gears or gear wheels reduction comprising at least two pairs of gear wheels positioned over three axes. The first pair of gear wheels connects a driving shaft to an intermediate shaft, i.e. the transmission shaft. The intermediate transmission shaft usually bears two integral gear wheels in order to transmit motion from the driving shaft to the driving wheel or wheels axis. Such arrangement is needed to obtain the final required reduction without having to adopt and use gear wheels with unfavourable geometric characteristics. Usually, the driving wheel or wheels axis is carried on a transmission semicarter and on a transmission cover according to the various possible geometric arrangements, by providing suitable housings for carrying the axes.

Through such a transmission arrangement, it is then possible to realise motor vehicles with one or more driving wheels of the desired type with a wheel base according to the needs.

For instance, by using suitable transmission carters and side cover, wherein the relative distance between shaft or driving axis and wheel or wheels axis is at the minimum, it is possible to realise the so called "short wheel base" vehicles.

On the other hand, if it is desired to realise the so called "long wheel base" vehicles, i.e. with maximum distance between shaft or driving axis and wheel or wheels axis, it will be necessary to use a transmission carter and relative side cover suitably manufactured for such final use.

It is then obvious that the manufacturer will have to realise a certain number of dies suitable for the carters and covers of the different types and sizes of motor vehicles with one or more driving wheels according to what it is desired. This fact requires significant financial resources and stock of materials.

Such a structure is, in this way, particularly complex and comprises a certain number of components to be assembled together according to the final required motor vehicle. The number of components from one side, the problems related to their assembly from the other, make the realisation of such a structure complex and expensive both from the components point of view and from the labour point of view.

An object of the present invention is then to find a solution to the technical problem relative to the different positioning of the various structure and transmission parts in the simplest way, as a function of the requested specification.

Another object is to eliminate, if possible, problems in the realisation of the components, with reduction of the related costs.

These objects, according to the present invention, are attained by a variable compact structure in a motor vehicle drive transmission with one or more driving wheels which can be placed on a motor vehicle chassis, which structure comprises a central body, at least one closing side cover element and at least three axes comprising a driving axis, a wheel or wheels axis and an intermediate transmission axis, in said structure the central body being of the plate type and providing, on at least one of the two sides, a series of at least four housings, a first fixed housing thereof being suitable for the driving axis, and the remaining at least three housings for axes carrying gear wheels to selectively receive two pairs of transmission gear wheels, according to at least two mutual positions of different wheel bases in relation to the positioning of said axis wheel and wherein the cover element provides at least two housings for the selected positioning of said axes.

Advantageously, such a structure is quite simple, but it is suitable to realise at least a couple of different positioning of the wheel or wheels axis in relation to the driving axis from which the driving motion comes.

The characteristics and advantages of a variable compact structure in a motor vehicle drive transmission with one or more driving wheels according to the present invention will be better understood through the following description referred to the drawings, in which:
- Figure 1: is a schematic side elevation view of a motor vehicle structure portion which shows the carter and the rear wheel positions,
- Figure 2: is a schematic side elevation view of a structure portion according to the present invention which is located on a carter side portion on the wheel side, wherein the relative distance between the driving axis and the wheel or wheels axis is maximum, in "long wheel base" motor vehicles,
- Figure 3: is an inner side elevation view of a cover element compatible with the carter in Figure 2,
- Figure 4: is a section along line IV-IV of Figures 2 and 3, after the elements have been assembled,
- Figure 5: is a schematic side elevation view of a structure portion as shown in Figure 2, wherein a new section line is indicated for a second application of the structure, wherein the relative distance between driving axis and wheel or wheels axis is minimum, in "short wheel base" vehicles,
- Figure 6: is an inner side elevation view of a cover element compatible with the carter in Figure 5 relative to the second application,
- Figure 7: is a section along line IV-IV of Figures 5 and 6, after the elements have been assembled.

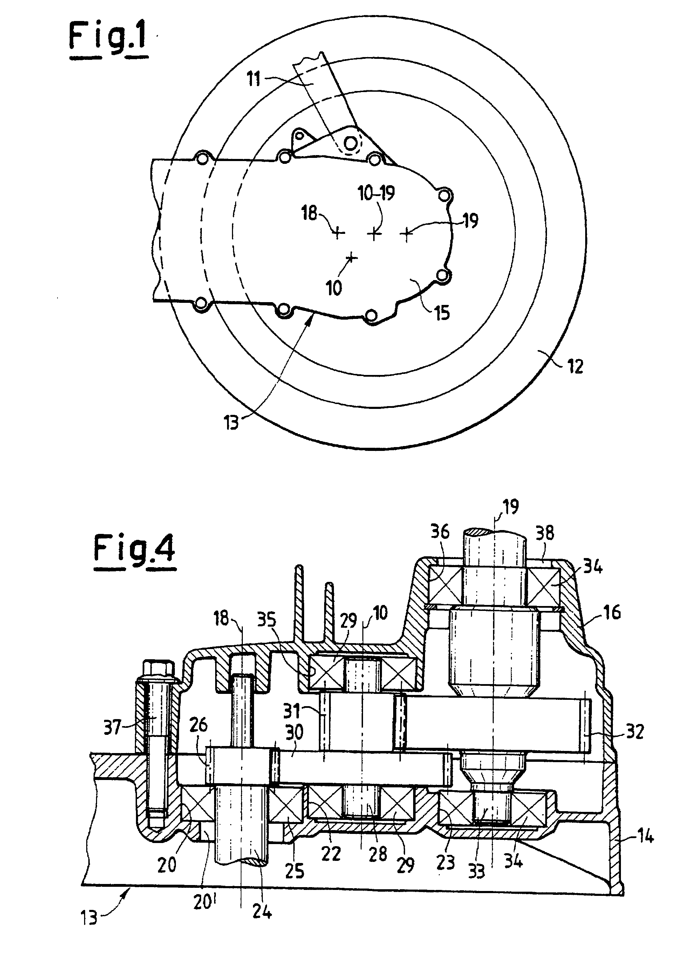

Referring to Figure 1, only a generic motor vehicle rear chassis part 11 is shown.

The chassis 11, in correspondence to a rear wheel 12, carries a variable compact structure for motor vehicle drive transmission with one or more driving wheels according to the present invention, which structure is indicated by numeral 13.

Such structure 13 can substantially comprise a central body 14 covered on the two sides by two side cover elements as closures.

A first cover element 15, shown in Figure 1, is located on the transmission side, and a second cover element 16 or 17, is located on the wheel side.

According to the invention, said closing side cover element located on the wheel side can be realised in at least two versions previously indicated with numerals 16 and 17 as a function of the motor vehicle type to be obtained. In fact, it is possible to realise a motor vehicle with a different distance between the driving axis, indicated at 18, and the driving wheel or wheels axis, indicated at 19, for a specific need.

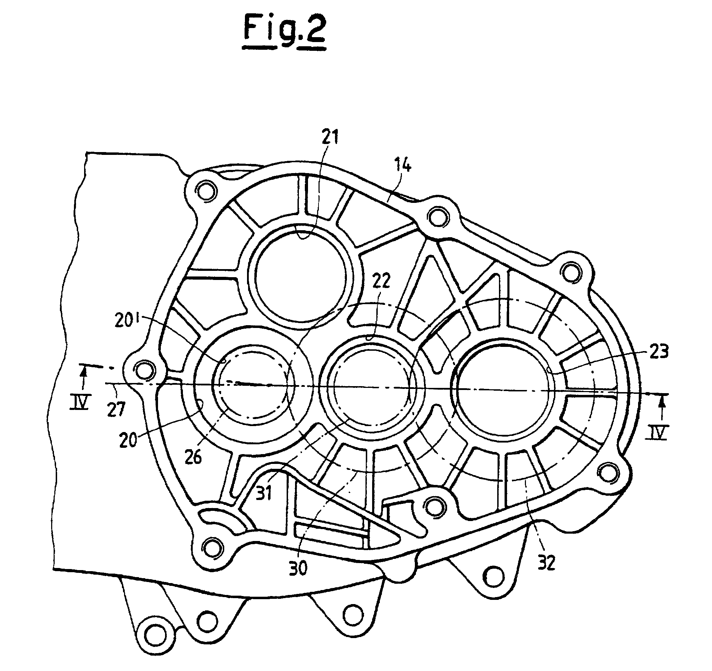

Figure 2 shows that the central body 14, obtained for instance by casting process, presents a series of four housings 20, 21, 22 and 23 suitable to serve as a support means for gear wheel shafts and the like.

In particular, housing 20 is the one that extends into a through hole 20' wherein the axis 18 is positioned and wherein the shaft 24 is located, with interposed bearing 25, and it is caused to rotate by the motor, not shown, and therefore it is called driving shaft.

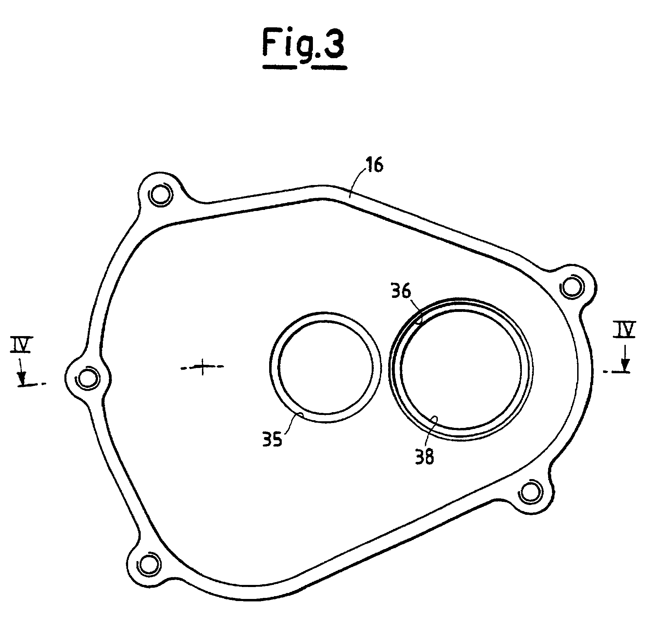

This shaft 24 has an integral gear wheel 26 which transmits the motion to the next transmission towards wheel 12. In the first embodiment of Figures 2-4 it is expected the use of the other housings 22 and 23 aligned with the first housing 20, along a central longitudinal axis 27 of the central body 14.

The first housing 22 has an additional shaft 28, supported by bearings 29, which has two integral gear wheels 30 and 31 and which serves as transmission shaft along intermediate axis 10. The first gear wheel 30 interacts with driving gear wheel 26, whereas the second gear wheel 31 engages with and transmits the motion to another gear wheel 32 integral with shaft 33. This shaft 33 has the same wheel or wheels axis 19 and it is itself supported by bearings 34.

This arrangement is possible due to the presence of the cover element 16, also obtained by a casting process, which provides housings 35 and 36 suitable to receive bearings 29 and 34 which support shafts 28 and 33. Further, housing 36 for the wheel shaft 33 extends into a through hole 38 to allow the outside projection of the shaft 33 carrying the wheel.

In this case, the three axes of the driving shaft 24, the transmission shaft 28 and the shaft 33 carrying the wheel are aligned along the central longitudinal axis 27. Further, the housing 20, comprising a through hole and a seat, and the two housings 22 and 23 comprising simple seats are used. Therefore a so called "long wheel base" arrangement of the motor vehicle is obtained, in such arrangement the relative distance between driving axis 18 and the wheel or wheels axis 19 is maximum.

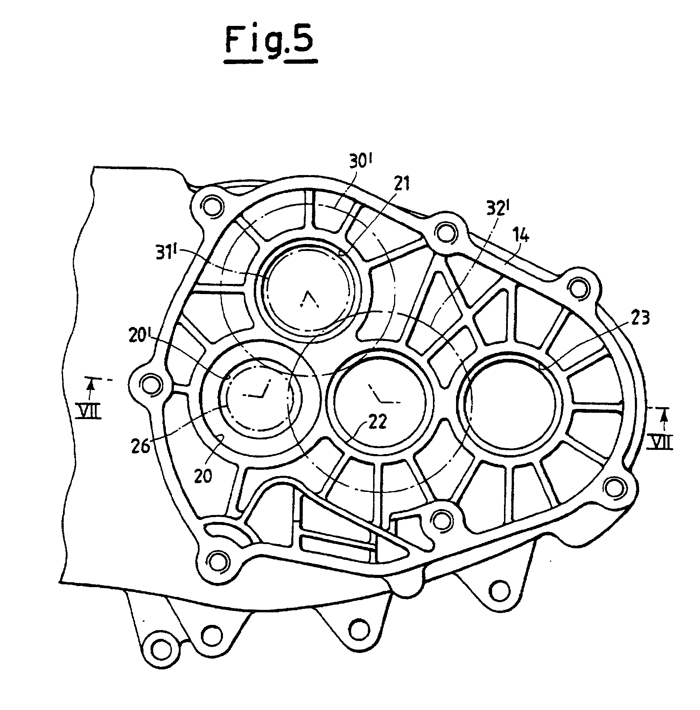

Along the perimeter of both the central body 14 and of the cover element 16 a series of coupling holes are provided to mutually connect the parts, as shown in Figure 4, by means, for example, of screws or studs 37.

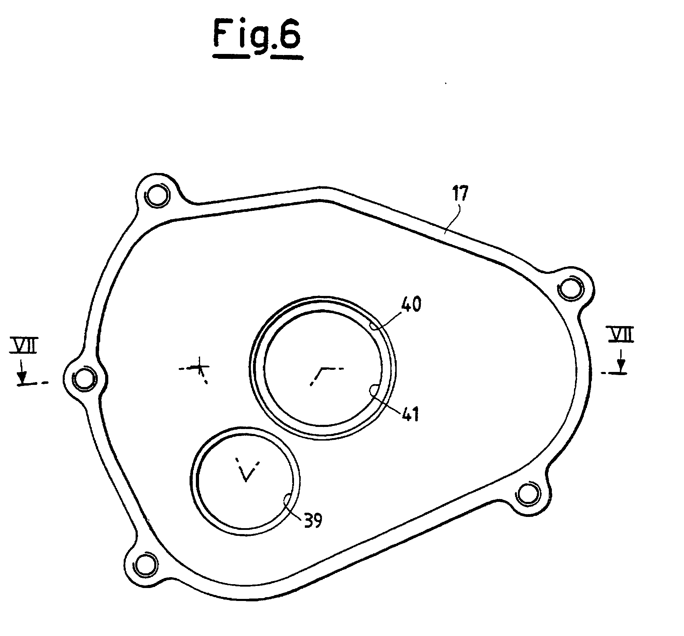

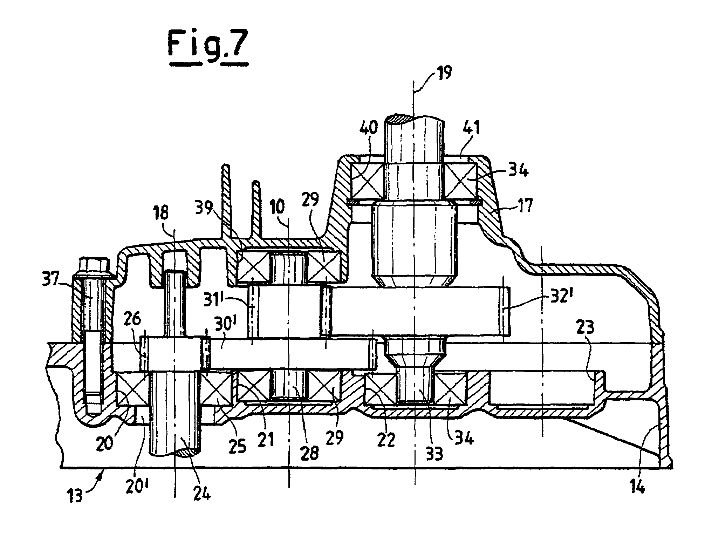

According to the present invention, a single central body 14 is realised, containing, in this specific embodiment, all the housings suitable to realise the various final arrangements. In fact, Figures 5-7 show how it is possible to obtain a motor vehicle arrangement wherein the relative distance between the driving axis 18 and the wheel or wheels axis 19 is minimum ("short wheel base").

In this case, housings 20, 21 and 22, closer to each other and not aligned along a single axis are used.

Further, a cover element 17, comprising different housings 39 and 40 suitable to receive the ends of the transmission shaft 28 and of the wheel shaft 33 is used. Also in this case the housing 40 for the wheel axis 33 extends through hole 41.

The first housing (of the three housings 20, 21 and 22) is fixed and it is used for the driving axis 18.

The two housings 21 and 22 carry the transmission intermediate axis 10 and the wheel or wheels axis 19.

To such purpose additional gear wheels 30', 31' and 32' are splined to the shafts 28 and 33 in order to realise the required transmission ratio.

In this case, it is clear that the overall dimensions of the cover element 17 are reduced and this allows a better clearance in arranging the remaining motor vehicle parts.

All this is realised thanks to the specific arrangement of the central body 14 which comprises four housings and to the realisation of at least two cover elements 16, 17 with different positioning of the housings. The castings of such elements are realised in order to receive the components of the transmission group with different geometric characteristics and mutual distances.

This technical solution, once the housing dimensions have been suitably selected, the through holes dimensions and the shaft end dimensions, makes the positionings interchangeable without any modification. In fact, it is only necessary to substitute the cover element which is a casting element of low importance in the whole system.

It should be noted that the overall shape of the part is almost unchanged, whereas a different positioning of the holes and of the housings on the cover element supporting the wheel should be noted.

In summary, the present invention discloses an original technical solution concerning the housings and the holes obtained in the principal or central casting in order to receive all the possible positionings. There is, in addition, the particular positionings of the cover element, outside the central casting or semicarter, which can support different transmissions and even receive further accessories, such as disc brakes, instead of drum brakes, different dimension wheels, and other modified elements.

It is then evident that this structure has, in this way, a clear function as a supporting structure and that it advantageously favours both an easy assembly of said components and a direct access to them.

Further, the compact configuration allows a rational and functional connection to the motor vehicle chassis and to the rear driving wheel 12.

In this structure there are also obtained the connection parts, as for example the outer holes and the like, which allow an easy and safe positioning to the chassis.

For the sake of simplicity there will not be mentioned all those known elements, such as gaskets, screws, seeger rings, etc., which are well visible in the figures and which are not strictly related to the invention since they are used as blocking elements, sealing elements and others.

According to the invention, a reduction to the minimum levels of the components of the supporting and housing structure of a motor vehicle propulsion system is attained.

## Claims

1. A compact variable structure in a motor vehicle drive transmission with one or more driving wheels (12) which can be placed on a motor vehicle chassis (11), the structure comprising a central body (14), at least one closing side cover element (16 or 17) and at least three axes comprising a driving axis (18), a wheel or wheels axis (19) and an intermediate transmission axis (10), in said structure the central body (14) being of the plate type and providing on at least one of the two sides a series of at least four housings (20, 21, 22, 23), a first fixed housing (20) thereof being suitable for the driving axis (18), and the remaining at least three housings (21, 22, 23) for axes carrying gear wheels to selectively receive two pairs of transmission gear wheels (26, 30; 31, 32; 26, 30'; 31', 32') according to at least two mutual positions of different wheel bases in relation to the positioning of said wheel axis (19) and wherein the cover element (16 or 17) provides at least two housings (35, 36; 39, 40) for the selected positioning of said axes (10, 19).

2. A structure according to claim 1, **characterised in that** said central body (14) comprises a body obtained by casting process wherein three housings (20, 22, 23) of said at least four housings are aligned along a central longitudinal axis (27) of said central body (14), one of said housings (20) extending into a through hole suitable for a driving shaft (24) positioned on said driving axis (18).

3. A structure according to claim 1, **characterised in that** one (36, 40) of said housings of said cover element (16 or 17) extends into a through hole (38,41).

## Patentansprüche

1. Kompakte variable Anordnung in einem Kraftfahrzeugantriebsgetriebe mit einem oder mehreren Antriebsrädern (12), die an einem Kraftfahrzeugchassis (11) angebracht werden kann, wobei die Anordnung umfasst einen Zentnkörper (14), zumindest ein schließendes Seitenabdeckelement (16 oder 17) und zumindest drei Achsen, die eine Antriebsachse (18), eine Radachse (19) oder Achse für die Räder (19) und eine dazwischen liegende Getriebeachse (10) umfassen, wobei in der Anordnung der Zentralkörper (14) vom Plattentyp ist und auf zumindest einer der beiden Seiten eine Serie von zumindest vier Gehäusen (20, 21, 22, 23) vorsieht, wobei deren erstes fixiertes Gehäuse (20) für die Antriebsachse (18) verwendbar ist und die restlichen zumindest drei Gehäuse (21, 22, 23) für Achsen verwendbar sind, die Zahnräder tragen, um selektiv zwei Paare von Getriebezahnrädern (26, 30; 31, 32; 26, 30'; 31', 32') gemäß zumindest zweier abwechselnder Stellungen von verschiedenen Radständen bezüglich der Positionierung der Radachse (19) aufzunehmen, und wobei das Abdeckelement (16 oder 17) zumindest zwei Gehäuse (35, 36; 39, 40) für die gewählte Positionierung der Achsen (10, 19) vorsieht.

2. Anordnung nach Anspruch 1,
**dadurch gekennzeichnet,**
**dass** der Zentralkörper (14) einen Körper umfasst, der durch einen Gussprozess hergestellt wird, wobei drei Gehäuse (20, 22, 23) der zumindest vier Gehäuse entlang einer zentralen Längsachse (27) des Zentralkörpers (14) ausgerichtet sind, wobei sich eines der Gehäuse (20) in ein Durchgangsloch erstreckt, das fur eine Antriebswelle (24) verwendbar ist, die an der Antriebsachse (18) positioniert ist.

3. Anordnung nach Anspruch 1,
**dadurch gekennzeichnet,**
**dass** sich eines (36, 40) der Gehäuse des Abdeckelements (16 oder 17) in ein Durchgangsloch (38, 41) erstreckt.

## Revendications

1. Structure variable compacte dans une transmission de véhicule à moteur avec une ou plusieurs roues d'entraînement (12) qui peuvent être placée sur un châssis (11) du véhicule à moteur, la structure comprenant un corps central (14), au moins un élément couvercle latéral de fermeture (16 ou 17) et au moins trois axes comprenant un axe d'entraînement (18), un axe de roue ou de roues (19) et un axe de transmission intermédiaire (10), le corps central (14) étant du type plaque dans ladite structure et foumissant sur au moins l'un des deux côtés une série d'au moins quatre logements (20, 21, 22, 23), dont un premier logement fixe (20) convient pour l'axe d'entraînement (18), et les au moins trois autres logements restants (21, 22, 23) conviennent à des axes portant des roues d'engrenage afin de recevoir sélectivement deux paires de rouas d'engrenage de transmission (26, 30 ; 31, 32 ; 26, 30' ; 31', 32') suivant au moins deux positions de bases de roue différentes par rapport au positionnement dudit axe de roue (19), et dans laquelle l'élément couvercle (16 ou 17) foumit eu moins deux logements (35, 36 ; 39, 40) pour le positionnement choisi desdits axes (10, 19).

2. Structure selon la revendication 1, **caractérisée en ce que** ledit corps central (14) comprend un corps obtenu par un procédé de moulage dans lequel trois logements (20, 22, 23) desdits au moins quatre logements sont alignés le long d'un axe longitudinal central (27) dudit corps central (14), et l'un desdits logements (20) s'étendant dans un perçage convenant pour un arbre d'entraînement (24) placé sur ledit axe d'entraînement (18).

3. Structure selon la revendication 1, **caractérisée en ce que** l'un (36, 40) desdits logements dudit élément couvercle (16 ou 17) s'étend dans un perçage (38, 41).
